# EUROPÄISCHE PATENTSCHRIFT

(11) **EP 0 757 187 B1**
(45) Veröffentlichungstag und Bekanntmachung des Hinweises auf die Patenterteilung: **03.09.2003**
(21) Anmeldenummer: 96112094.6
(22) Anmeldetag: 26.07.1996
(51) Int. Cl.: F16C 17/06

(54) **Gleitschuh zur Verwendung in einem Gleitlager**
Sliding pad for a plain bearing
Patin à glissement pour palier lisse

(30) Priorität: 02.08.1995 DE 19528339
(43) Veröffentlichungstag der Anmeldung: 05.02.1997
(73) Patentinhaber: RENK AKTIENGESELLSCHAFT, 86159 Augsburg (DE)
(72) Erfinder: Wyndorps, Paul, Dr.-Ing., 41061 Mönchengladbach (DE); Negwer, Bernd, 56626 Andernach (DE); Schmitz, Albert K., 30966 Hemmingen (DE)
(74) Vertreter: Schober, Stefan, Dipl.-Ing.

(56) Entgegenhaltungen:
- WO-A-95/28574
- DE-A- 4 343 965
- DE-C- 667 761
- US-A- 1 880 353
- US-A- 4 240 676
- US-A- 5 125 754

## Beschreibung

Die Erfindung betrifft einen Gleitschuh zur Verwendung in einem Axialgleitlager gemäß dem Oberbegriff von Anspruch 1.

### Stand der Technik:

DE 43 43 965 A zeigt gattungsgemäße kreiszylindrische Gleitschuhe mit einer sie stützenden Tellerfeder.

US 1 117 504 A zeigt kreiszylindrische Gleitschuhe mit einer Gleitfläche auf einer Stirnseite und einer kugelförmigen Stützfläche auf der anderen Stirnseite.

US 3 142 519 A zeigt segmentförmige Gleitschuhe.

DE 35 22 037 A zeigt ein Radialgleitlager mit radial wirkenden, kippbar angeordneten Gleitschuhen.

US-Patent 5 125 754 A zeigt Gleitschuhe mit Druckfedern, die mit dem Gleitteil aus einem Stück gebildet sind.

Die nachveröffentlichte WO 95 28 574 A zeigt kreiszylindrische Gleitkörper mit einer Umfangsnut, welche ihn in einen Gleitteil und eine tellerförmige Druckfeder unterteilt, die durch einen zentralen Verbindungsteil miteinander verbunden sind und zusammen aus einem einstückigen Element bestehen. Der Gleitteil ist auf seiner von der tellerförmigen Druckfeder abgewandten Stirnseite mit einer Gleitfläche versehen, die aus einem auf den Gleitteil aufgebrachten dünnen Schicht aus gleitfähigem Material besteht. Der die Tellerfeder aufweisende Teil der Gleitkörper sitzt in Bohrungen eines Tragkörpers und wird darin von der Bohrungswand radial fixiert.

### Beschreibung der Erfindung:

Durch die Erfindung soll die Aufgabe gelöst werden, die Gleitschuhe derart auszubilden, daß sie nicht nur aus Stahl, sondern auch aus einem Material mit einem deutlich niedrigeren Elastizitätsmodul als Stahl hergestellt werden können, vorzugsweise aus Kunststoff. Ferner soll durch die Erfindung die Aufgabe gelöst werden, die Gleitschuhe derart auszubilden, daß bei sich ändernden Betriebstemperaturen des Lagers sich die Gleitschuhgeometrie für jede Betriebstemperatur selbsttätig auf optimale Werte einstellt.

Desweiteren soll durch die Erfindung die Aufgabe gelöst werden, den Gleitschuh derart auszubilden, daß er auf einfache Weise und preiswert herstellbar ist.

Diese Aufgaben werden durch einen Axialgleitlager - gleitschuh gemäß Anspruch 1 gelöst.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen:
- Fig. 1: schematisch einen Axialschnitt durch einen mehrteiligen Gleitschuh ,
- Fig. 2: schematisch einen Axialschnitt durch einen Gleitschuh , bei welchem einige Teile von ihm zusammen aus einem einteiligen Körper hergestellt sind,
- Fig. 3: schematisch einen Axialschnitt durch einen Gleitschuh , welcher zusammen mit einer Tellerfeder aus einem einteiligen Körper besteht,
- Fig. 4: schematisch einen Axialschnitt eines Gleitschuhes nach der Erfindung, welcher zusammen mit einer Tellerfeder und einem Zapfen mit einem Ringbund aus einem einteiligen Körper besteht,
- Fig. 5: schematisch einen Axialschnitt durch einen zweiteiligen Gleitschuh ,
- Fig. 6: schematisch einen Axialschnitt durch einen einteiligen Gleitschuh, welcher keinen positionierenden Zapfen aufweist,
- Fig. 7: einen Axialschnitt durch ein kombiniertes Axiallager und Radiallager.

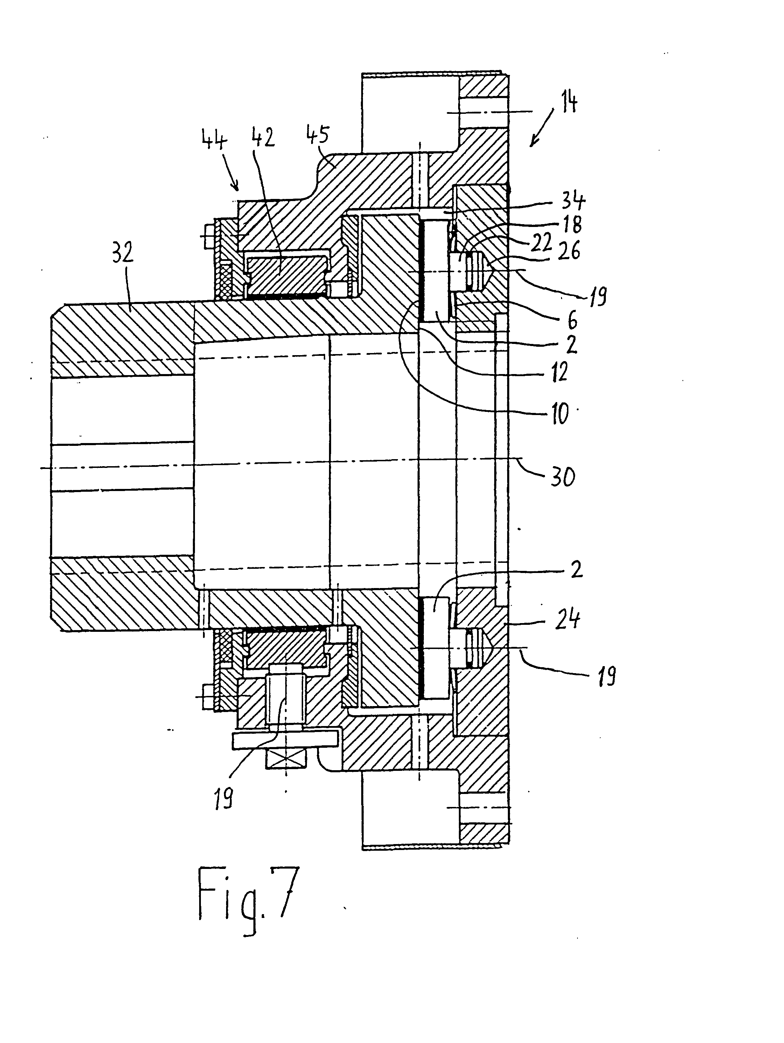

Die Funktionen des jeweiligen Gleitschuhs 2 können auf folgende Teile aufgeteilt werden: Einen Gleitteil (sliding pad) 4, einen Halterteil 6, eine Druckfeder 8, z.B. in Form einer Tellerfeder, zum Ausgleich von Höhendifferenzen zwischen einer Gleitfläche 10 des Gleitteils 4 und einer ihr gegenüberliegenden und relativ zu ihr rotierenden Anlauffläche 12 (Fig. 7) eines Axial-Gleitlagers 14, und eine Haltevorrichtung 16, welche aus einem axial vom Halterteil 6 entgegengesetzt zur Gleitfläche 10 wegragenden Zapfen 18 und einem auf ihm in einer Ringnut 20 sitzenden und radial überstehenden, radial federelastischen Führungsring 22 (Federring, Gummiring) bestehen kann und zur schwenkbaren Befestigung des Gleitschuhes 2 in einer zylindrischen Öffnung 26 des Tragkörpers 24 gemäß Fig. 7 dient. Der Umfangsrand 21 der Gleitfläche 10 ist abgeflacht. Das Gleitlager 14 ist ein Axial-Gleitlager und sein Tragkörper 24 erstreckt sich ringförmig um die Lagerdrehachse 30. Eine Vielzahl von Gleitschuhen 2 ist ringförmig um die Lagerdrehachse 30 herum am Tragkörper 24 befestigt. Die Gleitschuhe 2 sind axial wirkende Gleitlagerelemente. Die Anlauffläche 12 ist an einem Lagerstützkörper 32 ringförmig in einer Ebene radial zur Lagerdrehachse 30 angeordnet. Im Lagerstillstand liegen die Gleitflächen 10 der Gleitschuhe 2 an der Anlauffläche 12 an. Bei Rotation des Lagerstützkörpers 32 relativ zum Tragkörper 24 und den Gleitschuhen 2 um die Lagerdrehachse 30 wird Schmierstoff aus dem zwischen ihnen gebildeten Schmierstoffraum 34 zwischen die Gleitflächen 10 und die Anlauffläche 12 gedrängt, wobei die Gleitschuhe 2 mit ihrer Mittelachse 19 relativ zur Lagerdrehachse 30 aus ihrer zuvor achsparallelen Lage in eine Schräglage kippen, so daß zwischen den Gleitflächen 10 und der Anlauffläche 12 ein keilförmiger Schmierspalt mit Schmierstoff entsteht, welcher die Gleitflächen 10 von der Anlauffläche 12 trennt. Die bei Betrieb des Lagers entstehende Temperatur und der Druck im Schmierspalt sind abhängig von der Drehzahl und der mechanischen Belastung des Lagers. Dadurch entstehen druck- und temperaturabhängige Formveränderungen im Gleitschuh 2. Damit die druckund temperaturabhängigen Verformungen des Gleitschuhes mit Sicherheit keine konkave Form der Gleitfläche 10 erzeugen können, wird die Gleitfläche 10 der Gleitschuhe 2 bei der Produktion mit einer kleinen konvexen Balligkeit von ca. 10 µm hergestellt. Die Größe der Balligkeit und deren Radius verändert sich während des Lagerbetriebes in Abhängigkeit vom Druck und der Temperatur, insbesondere der Differenz zwischen der Temperatur an der Gleitfläche 10 und der Temperatur im Inneren des Gleitschuhes 2. Bei Drehbeginn ist die Lagertemperatur gleich der Umgebungstemperatur. Während des Betriebes kann sich die Lagertemperatur je nach Lagerdrehzahl und mechanischer Belastung ändern.

Einer der beiden Tragkörper 24 oder Lagerstützkörper 32 ist nicht-rotierbar und der betreffende andere ist rotierbar angeordnet. Bei dem Vertikal-Lager von Fig. 7 ist der Tragkörper 24 nicht-rotierbar und der Lagerstützkörper 32 (Läufer), welcher mit einer Welle drehfest verbindbar ist, rotierbar angeordnet.

Fig. 7 zeigt ein kombiniertes Axial-Gleitlager 14 und Radial-Gleitlager 44 mit dem Lagerstützkörper 32 und einem Lagergehäuse 45.

Der Außenumfang 50 der Gleitschuhe 2 (und entsprechend auch die Radial-Gleitschuhe 42) ist mit einer Umfangs-Ausnehmung 52 versehen, durch welche sich der über der Ausnehmung 52 liegende, einen Randbereich 54 der Gleitfläche 10 bildende Gleitschuh-Randbereich 56, ausgehend von dem Gleitschuh-Zentralbereich 58 am Grund 60 der Ausnehmung 52, in diese Ausnehmung 52 hinein durch den Druck und die Temperaturdifferenzen abbiegen kann, welche bei Rotation des Gleitlagers zwischen der Temperatur an der Gleitfläche 10 und der Temperatur in den darunterliegenden tieferen Bereichen des Gleitschuhes 2 entstehen.

Dadurch wird der Vorteil erzielt, daß sich die Gleitschuhgeometrie für jede Betriebstemperatur und jede mechanische Belastung selbsttätig auf einen optimalen Wert einstellt. Dadurch wird es möglich, anstelle des bisher verwendeten Materiales Stahl andere Materialien für den Gleitschuh zu verwenden, welche einen deutlich niedrigeren Elastizitätsmodul als Stahl haben. Damit wird beispielsweise auch die Möglichkeit eröffnet, Kunststoffe zu verwenden.

Durch die Umfangs-Ausnehmung 52 ist das Gleitelement 4 des Gleitschuhes 2 in Richtung seiner Lager-Belastung nicht vollflächig, sondern durch seinen Halterteil 6 nur zu einem Teil 58 seiner Gleitfläche 10 unterstützt. Dies ermöglicht das genannte Einfedern oder Abbiegen im Randbereich 54 des Gleitelements 4 unter mechanischer und thermischer Belastung derart, daß sich für alle Betriebssituationen automatisch eine gute Geometrie des zwischen der Gleitfläche 10 und der Anlauffläche 12 (Fig. 7) gebildeten Spaltes einstellt.

Der Gleitschuh 2 hat eine kreiszylindrische Form mit der Mittelachse 19.

Die Umfangs-Ausnehmung 52 erstreckt sich um den gesamten Umfang des Gleitschuhes. Dadurch ist der Gleitschuh für beide Lager-Drehrichtungen in gleicher Weise brauchbar, auch wenn der Gleitschuh bei der Montage oder während des Betriebes um seine Mittelachse 19 in eine beliebige Position gedreht wird. Am wichtigsten ist die Umfangs-Ausnehmung 52, in Laufrichtung des Gleitschuhes relativ zur Anlauffläche 12 gesehen, an seiner Auflaufkante.

Die Druckfeder 8 und die Haltevorrichtung 16 bilden zusammen Kippmittel, welche das Kippen des Gleitschuhes 2 quer zu seiner Mittelachse 19 und damit auch quer zur Lagerdrehachse 30 ermöglichen. Im Falle von Radial-Gleitschuhen 42 in Fig. 7 ist deren Mittelachse 19 radial zur Lagerdrehachse 30 ausgerichtet, im ungekippten Zustand, und kann um die Lagerdrehachse 30 in eine nicht-radiale Richtung kippen.

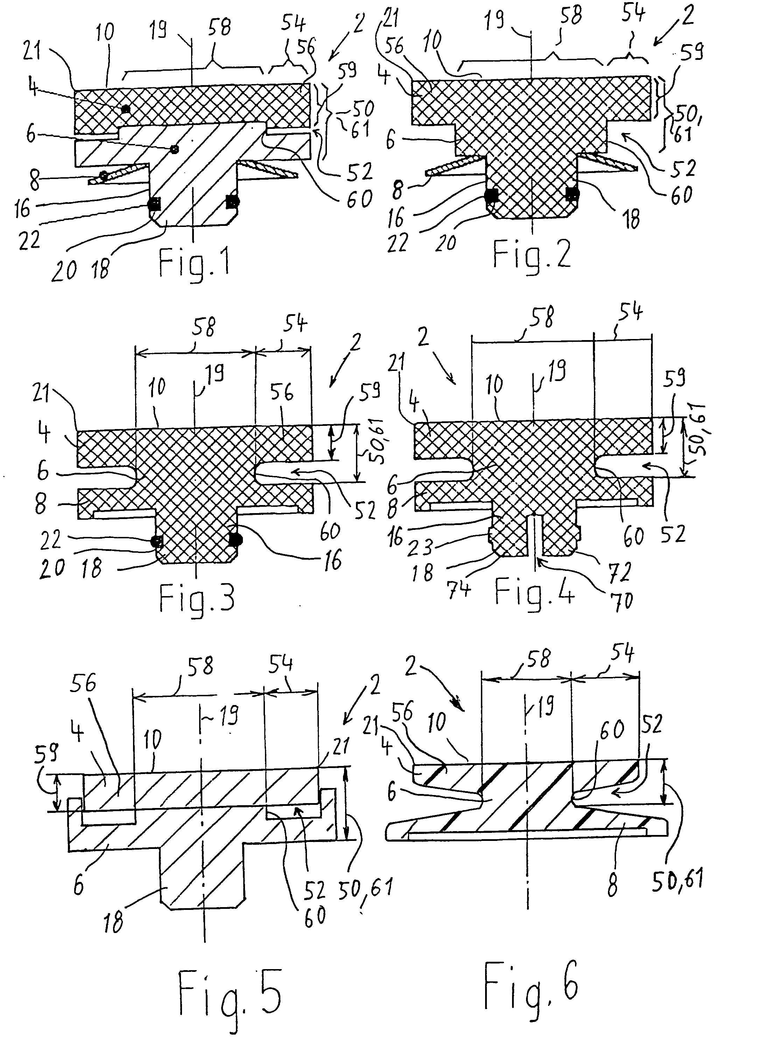

Die gleitschuhe nach den Fig. 2 bis 6 enthalten die gleichen Merkmale der Erfindung, wie sie mit Bezug auf Fig. 1 beschrieben wurden. Im folgenden werden nur die Unterschiede beschrieben.

Bei dem gleitschuh nach Fig. 2 bestehen der Gleitteil 4 und sein Halterteil 6 zusammen einteilig aus einem einzigen Körper. Dieser kann aus Stahl oder aus einem Material mit einem deutlich niedrigeren Elastizitätsmodul bestehen, z.B. aus Kunststoff.

Bei dem gleitschuh nach Fig. 3 ist die zum Ausgleich von Höhendifferenzen im Lager verwendete Druckfeder 8 in den Gleitschuh integriert, so daß hier diese Druckfeder 8, der Halterteil 6 und der Gleitteil 4 zusammen aus einem einteiligen Körper bestehen.

Bei der erfindungsgemäßen Ausführungsform nach Fig. 4 ist anstelle eines Führungsringes 22 ein Ringbund 23 vorgesehen, der ein einteiliger Körper mit den anderen Teilen des Gleitschuhes 2 ist. Ferner ist der Zapfen 18 im Bereich des Ringbundes 23 in Längsrichtung durch einen diametral vollständig durch ihn hindurchgehenden und sich axial über mehr als 3/4 seiner Länge erstreckenden Schlitz 70 geschlitzt. Dadurch ist der Zapfen 18 auf zwei (oder mehr) fingerartige Zapfenteile 72 und 74 aufgeteilt, die radial federelastisch zusammendrückbar sind. Diese Elastizität ersetzt die Elastizität des Führungsringes 22. Der Führungsring 22 oder Ringbund 23 wird benötigt, damit der Gleitschuh 2 innerhalb der ihn aufnehmenden Öffnung 26 des Tragkörpers 24 radial und axial fixiert wird und die genannten Kippbewegungen leichter und in vorbestimmten Wegen machen kann.

Fig. 5 zeigt einen gleitschuh ähnlich Fig. 1. In Fig. 1 greift der Halterteil 6 in eine stirnseitige Vertiefung des Gleitteiles 4 auf seiner von der Gleitfläche 10 abgewandten Seite ein, um die beiden Teile relativ zueinander radial zu positionieren. In Fig. 5 sitzt das Gleitteil 4 in einer stirnseitigen Ausnehmung des Halterteiles 6, um die beiden Teile relativ zueinander zu positionieren.

Fig. 6 zeigt einen gleitschuh, bei welchem der Gleitschuh 2 einteilig nur aus dem Gleitteil 4, dem Halterteil 6 und der Druckfeder 8 besteht. Die tellerförmige Druckfeder 8 von Fig. 6 hat einen größeren Durchmesser als alle anderen Teile des Gleitschuhes 2. Dies hat den Vorteil, daß die Druckfedern 8 von benachbarten, in gleicher Weise ausgebildeten Gleitschuhen 2 in Lagerumfangsrichtung sich gegenseitig abstützen können, ohne daß die Kippbeweglichkeit ihrer Gleitteile 4 gestört wird. Es hat außerdem den Vorteil, daß der Schmierstoff schneller von den einzelnen Gleitschuhen 2 abfließen und frischer Schmierstoff zufließen kann, wodurch die Wärmeentwicklung im Gleitschuh, insbesondere im Gleitteil 4, reduziert wird. Während bei den Ausführungsformen nach den Fig. 1 bis 5 die Umfangs-Ausnehmung 52, im Axialschnitt der Gleitschuhe 2 gesehen, eine im wesentlichen rechteckige Form hat, und damit auch der biegbare Randabschnitt 54 des Gleitteils 4 und, bei den Fig. 3 und 4 auch die Druckfeder 8, je einen rechteckigen Querschnitt haben, ist bei der Ausführungsform nach Fig. 6 die Umfangs-Ausnehmung 52 radial von innen nach außen keilförmig größer werdend ausgebildet. Dadurch können der Gleitteil 4 in seinem Randbereich 54 und/oder die Druckfeder 8 radial von innen nach außen mit einer abnehmenden Dicke ausgebildet werden. Durch diese Maßnahme läßt sich die mechanische Belastung, insbesondere die Biegespannung in der Druckfeder 8 und im Gleitteil 4 gleichmäßiger verteilen, und es wird Material eingespart. Durch diese Maßnahme wird auch die selbständige Einstellung der optimalen Gleitschuh-Geometrie, nämlich die ballige Form der Gleitfläche 10, während des Betriebes verbessert.

Die Gleitschuhe können beispielsweise zur axialen Lagerung von Schiffs-Propellerwellen oder zur axialen Lagerung von Wellen in Turbinen verwendet werden. Die bekannten Gleitschuhe funktionieren durchaus zufriedenstellend, haben jedoch den Nachteil, daß durch die Verwendung metallischer Gleitflächen beim Anlaufen (Starten) und beim Auslaufen (Drehzahlreduzierung bis zum Stillstand) der Wellen ein hoher Materialverschleiß durch Reibung auftreten kann. Um den Verschleiß der Gleitflächen, insbesondere an ihren Anlaufkanten, möglichst gering zu halten, ist es wünschenswert, weichere Lagerwerkstoffe zu verwenden. Ein Nachteil der handelsüblichen Gleitschuhe besteht darin, daß oft Lagerwerkstoffe verwendet werden, die Arsen, Cadmium oder Blei enthalten, welche teilweise an den Schmierstoff abgegeben werden. Sowohl die Entsorgung des Schmierstoffes als auch die Entsorgung der verschlissenen Gleitschuhe 2 stellen ein Problem der Umweltverschmutzung dar.

Als Lagerwerkstoff für den Gleitteil 4 und dessen Gleitfläche 10, aber auch für alle anderen Teile des Gleitschuhes, kann Kunststoff verwendet werden. Bei Verwendung von Kunststoff als Lagerwerkstoff ist der Verschleiß der Gleitfläche im allgemeinen gering und es kann aufgrund der sehr oft guten Gleiteigenschaften des Kunststoffes auf Schmierstoff verzichtet oder zumindest ein niedriger additivierter (weniger Additive enthaltender) Schmierstoff, meist Öl, teilweise sogar Wasser, zur Schmierung verwendet werden. Viele Kunststoffe sind recyclebar.

Die Funktion des Lagers ist stark von einer geringen pilzförmigen oder balligen Form der Gleitschuhe in Betrieb abhängig. Die Größe dieser Balligkeit liegt beim Betrieb des Lagers in einem Bereich von ungefähr 10 µm bis 30 µm. Durch diese Pilzform (Balligkeit) bildet sich ein konvergenter Schmierspalt zwischen der Gleitfläche 10 des Gleitelements 4 und einer gegenüberliegenden Anlauffläche 12 aus, in dem der Schmierstoff gestaut wird. Der dabei auftretende Druck entspricht der Tragkraft des Lagers.

Handelsübliche, metallische Gleitschuhe 2 werden von den Herstellern mit einer Balligkeit von ca. 10 µm hergestellt. Dadurch wird das Anfahren (Startvorgang) der Gleitschuhe 2 erleichtert. Im Betrieb des Lagers stellt sich dann eine andere Pilzform (Balligkeit) des Gleitschuhes automatisch ein, im wesentlichen durch die thermisch verursachte Ausdehnung des Gleitschuhes. Aufgrund des hohen Elastizitätsmoduls von Metallen ist die Verformung eines aus Metall bestehenden Gleitschuhes durch den mechanischen Lagerdruck vernachlässigbar klein.

Bei der Verwendung von Kunststoff für die bekannten Gleitschuhe ist die thermische Geometrieveränderung nicht ausreichend, um für alle Betriebssituationen eines Lagers die optimale Pilzform (Balligkeit) während des Lagerbetriebes automatisch auszubilden. Bei der Herstellung eines Gleitschuhes kann die Pilzform (Balligkeit) seiner Gleitfläche 10 nur für eine bestimmte Betriebssituation hergestellt werden, welche insbesondere von den Parametern Lagertemperatur, Schmierstoffviskosität, mechanische Lagerbelastung, zeitlicher Verlauf der mechanischen Belastung, Rauheiten der Oberflächen, Art der Lagerwerkstoffe usw. abhängig ist. Da sich während des Betriebes eines Lagers diese Parameter ändern, ist es erwünscht, daß sich die Gleitschuhgeometrie für jede Betriebssituation selbsttätig optimal einstellt.

Die Möglichkeit des Einfederns, d.h. des Biegens des Randbereiches 54/56 des Gleitteils 4 in Richtung in die Umfangs-Ausnehmung 52, ermöglicht genau diese sich selbst optimal einstellende Pilzform oder Balligkeit des Gleitschuhes, beispielsweise auch dann, wenn der Gleitteil 4 oder der gesamte Gleitschuh 2 aus Kunststoff hergestellt wird. Die Erfindung offenbart eine für die Verwendung von Kunststoffen besonders geeignete geometrische Form des Gleitschuhes.

Die weiteren Merkmale der Erfindung sparen Herstellkosten und reduzieren die Anzahl der für einen Gleitschuh erforderlichen Einzelteile.

Die Gleitfläche 10 kann durch den Gleitteil 4 selbst oder durch eine darauf aufgebrachte Materialschicht aus einem anderen Material gebildet sein.

Damit sich die Größe der Balligkeit der Gleitfläche 10 in Abhängigkeit von temperaturbedingten Materialausdehnungen selbsttätig auf optimale Werte einstellen kann, ist es wichtig, daß die axiale Dicke 59 des Randabschnittes 56 über der Umfangs-Ausnehmung 52 wesentlich kleiner ist als die axiale Dicke 61 des Gleitschuhes 2 in seinem Zentrumsbereich 58 radial innerhalb der Ausnehmung 52. Im Betrieb des Lagers entsteht in der Gleitfläche 10 eine höhere Temperatur als in den unter der Gleitfläche 10 tiefer gelegenen Bereichen des Gleitschuhes 2. Der Umfangs-Ausschnitt 52 ist bei allen Ausführungsformen derart, daß die Balligkeit der Gleitfläche 10 mit größer werdender Temperaturdifferenz ebenfalls größer wird.

## Patentansprüche

1. Axialgleitlager-Gleitschuh mit folgenden Merkmalen:
er hat eine kreiszylindrische Form mit einer theoretischen Mittelachse (19); eine Gleitfläche (10) auf einer Stirnseite zur Abstützung an einer relativ zu ihr rotierenden Anlauffläche (12) eines Axialgleitlagers; eine Druckfeder (8) in Form einer Tellerfeder auf der von der Gleitfläche (10) abgewandten Stirnseite zur axialen Abstützung des Gleitschuhes an einem Tragkörper des Axialgleitlagers; ein axialer Zapfen (18) auf der von der Gleitfläche (10) abgewandten Stirnseite, wobei der Zapfen mit Mitteln (23,70,72,74) versehen ist, durch welche er in einer zylindrischen Öffnung des Tragkörpers des Axialgleitlagers radial positioniert und
gleichzeitig kippbeweglich gehalten werden kann;
**dadurch gekennzeichnet,**
**daß** die tellerförmige Druckfeder (8), der Zapfen (18), die Mittel (23,70,72,74) zu seiner kippbeweglichen Positionierung, und der Teil des Gleitschuhes, welcher mit der Gleitfläche (10) versehen ist, zusammen aus einem einteiligen Körper bestehen; daß der einteilige Körper um seinen gesamten Umfang mit einer Umfangs-Ausnehmung (52) versehen ist, welche ihn in die tellerförmige Druckfeder (8) und in einen Gleitteil (4) unterteilt, welch letzterer mit der Gleitfläche versehen ist, wobei der über der Umfangs-Ausnehmung (52) liegende Randbereich des Gleitteiles (4), welcher einen Randbereich (54) der Gleitfläche (10) enthält, sich bei Temperaturanstieg in die Umfangs-Ausnehmung (52) hinein abbiegt, wenn die Temperatur des Gleitschuhes auf eine beim Betrieb eines Axialgleitlagers normalerweise entstehende Temperatur ansteigt und dabei in der Gleitfläche (10) eine größere thermische Materialausdehnung auftritt als in den tieferen Bereichen des Gleitschuhes; daß die genannten Mittel (23,70,72,74) einen Ringbund (23) aufweisen, welcher an dem Zapfen (18) gebildet ist und ein einteiliges Stück von ihm ist, daß das Zapfenende bis über den Ringbund (23) hinaus in Längsrichtung geschlitzt (70) ist und dadurch in fingerartige Zapfenteile (72,74) aufgeteilt ist, die radial federelastisch zusammendrückbar sind.

2. Axialgleitlager-Gleitschuh nach Anspruch 1,
**dadurch gekennzeichnet,**
**daß** der einteilige Körper aus Kunststoff besteht.

3. Axialgleitlager-Gleitschuh nach Anspruch 1 oder 2,
**dadurch gekennzeichnet,**
**daß** die Gleitfläche (10) durch eine auf den Gleitteil (4) aufgebrachte Materialschicht gebildet ist, welche aus einem anderen Material als der Gleitteil (4) besteht.

## Claims

1. Axial-plain-bearing sliding shoe having the following features:
it has a circular-cylindrical shape with a theoretical centre axis (19); a sliding
surface (10) on one end face for resting on a thrust surface (12) of an axial plain bearing which rotates relative to it; a compression spring (8) in the form of a disc spring on the end face directed away from the sliding surface (10) for axial support of the sliding shoe on a carrying element of the axial plain bearing; an axial pin (18) on the end face directed away from the sliding
surface (10), the pin being provided with means (23,70,72,74) by which it can be positioned radially in a cylindrical opening of the carrying element of the axial plain bearing and at the same time held in a tiltably movable manner; **characterised in that** the disc-shaped compression spring (8), the pin (18), the means (23,70,72,74) for its tiltably movable positioning, and the part of the sliding shoe provided with the sliding surface (10) together consist of an integral element; **in that** the integral element is provided around its entire periphery with a peripheral recess (52) which subdivides it into the disc-shaped compression spring (8) and into a sliding
pad (4) provided with the sliding surface, the edge region, lying above the peripheral recess (52), of the sliding pad (4), which includes an edge
region (54) of the sliding surface (10), bending into the peripheral recess (52) as the temperature of the sliding shoe rises to a temperature normally produced during the operation of an axial plain bearing and as it does so a greater thermal material expansion occurs in the sliding
surface (10) than in the deeper regions of the sliding shoe; **in that** the said means (23,70,72,74) have an annular collar (23) which is formed on the pin (18) and is an integral part of it, **in that** the pin end is slotted (70) in the longitudinal direction to a point beyond the annular collar (23) and thereby divided into fingerlike pin parts (72,74) which are radially resiliently compressible.

2. Axial-plain-bearing sliding shoe according to Claim 1, **characterised in that** the integral element consists of plastic.

3. Axial-plain-bearing sliding shoe according to Claim 1 or 2, **characterised in that** the sliding surface (10) is formed by a material layer applied to the sliding pad (4), the layer consisting of a different material than the sliding pad (4).

## Revendications

1. Patin de glissement pour palier lisse de butée présentant les caractéristiques suivantes:
il possède une forme cylindrique de révolution, avec un axe central théorique (19); une surface de glissement (10) sur une face frontale destinée à venir en appui sur une surface de réaction (12), tournant par rapport à elle, d'un palier lisse de butée; un ressort de pression (8) sous forme d'une rondelle-ressort sur la face frontale tournée à l'opposé de la surface de glissement (10) et destiné à mettre en appui axial le patin de glissement contre un corps porteur du palier lisse de butée; un tenon axial (18) sur la face frontale tournée à l'opposé de la surface de glissement (10), le tenon étant pourvu de moyens (23, 70, 72, 74) par lesquels il peut être positionné radialement dans une ouverture cylindrique du corps porteur du palier lisse de butée et peut y être simultanément maintenu avec une liberté de basculement,
**caractérisé en ce que** le ressort de pression en forme de rondelle (8), le tenon (18), les moyens (23, 70, 72, 74) pour son positionnement avec liberté de basculement et la partie du patin de glissement, qui est pourvue de la surface de glissement (10), sont ensemble réalisés sous forme d'un corps monobloc; **en ce que** le corps monobloc est pourvu, autour de sa surface périphérique entière, d'un évidement périphérique (52) qui le subdivise en le ressort de pression en forme de rondelle (8) et en une partie de glissement (4), laquelle est pourvue de la surface de glissement, la région de bord de la partie de glissement (4), qui est située au-dessus de l'évidement périphérique (52) et qui contient une région de bord (54) de la surface de glissement (10), se courbant alors, en cas d'élévation de température, à l'intérieur de l'évidement périphérique (52), lorsque la température du patin de glissement s'élève à une température normalement engendrée pendant le service d'un palier lisse de butée et qu'il se produit alors dans la surface de glissement (10), une dilatation thermique de matériau plus forte que dans les régions plus basses du patin de glissement; **en ce que** les moyens mentionnés (23, 70, 72, 74) comprennent un collet annulaire (23), qui est formé sur le tenon (18) et est un élément d'une seule pièce avec celui-ci, **en ce que** l'extrémité du tenon est fendue (70) en direction longitudinale jusqu'au-delà du collet annulaire (23) et, de ce fait, est divisée en parties de tenon semblables à des doigts (72, 74), qui sont compressibles élastiquement en direction radiale.

2. Patin de glissement pour palier lisse de butée selon la revendication 1, **caractérisé en ce que** le corps monobloc est réalisé en matière plastique.

3. Patin de glissement pour palier lisse de butée selon la revendication 1 ou 2, **caractérisé en ce que** la surface de glissement (10) est formée par une couche de matériau qui est appliquée sur la partie de glissement (4) et qui est réalisée en un autre matériau que celui de la partie de glissement (4).
